# EUROPÄISCHE PATENTSCHRIFT

(11) **EP 3 244 187 B1**
(45) Veröffentlichungstag und Bekanntmachung des Hinweises auf die Patenterteilung: **14.11.2018**
(21) Anmeldenummer: 17156240.8
(22) Anmeldetag: 15.02.2017
(51) Int. Cl.: G01M 99/00, A47C 31/12

(54) **VORRICHTUNG UND VERFAHREN ZUR PRÜFUNG DER STAUCHHÄRTE VON SCHAUMSTOFFEN UND/ODER POLSTERUNGEN, INSBESONDERE MATRATZEN**
APPARATUS AND METHOD FOR MEASURING INDENTATION LOAD DEFLECTION OF FOAMS AND/OR MATTRESSES OR UPHOLSTERY, PARTICULARLY MATTRESSES
DISPOSITIF ET PROCÉDÉ POUR MESURER LA RÉSISTANCE À LA COMPRESSION DE MOUSSE ET/OU DES MATELAS OU REMBOURRAGES, EN PARTICULIER DES MATELAS

(30) Priorität: 12.05.2016 DE 102016108799
(43) Veröffentlichungstag der Anmeldung: 15.11.2017
(73) Patentinhaber: Weinmann Sondermaschinen und Steuerungsbau GmbH, 91217 Hersbruck (DE)
(72) Erfinder: Weinmann, Peter, 91217 Hersbruck (DE)
(74) Vertreter: Götz, Georg Alois

(56) Entgegenhaltungen:
- DE-A1- 4 139 697
- DE-A1- 10 108 372
- DE-A1-102004 001 182
- DE-U1-202016 000 141

## Beschreibung

Die Erfindung betrifft eine Prüfvorrichtung zur Messung der Stauchhärte von Schaumstoffen und oder Polsterungen, insbesondere Matratzen. Der Begriff Polsterung umfasst alle möglichen Arten der Polsterung wie beispielsweise Schaumstoffpolsterungen, geschnürte Federung oder Polsterungen mit Federkern, der Begriff Matratze umfasst unter anderem reine Schaumstoffmatratzen, Federkernmatratzen aber auch Boxspringbetten. Zur Messung der Stauchhärte umfasst die Prüfvorrichtung einen Prüfstempel, der mit einer einstellbaren Kraft, insbesondere einer Druck- und/oder Gewichtskraft beaufschlagbar ist. Der Prüfstempel ist mittels der einstellbaren Kraft vertikal entlang einer Strecke bewegbar. Vertikal bedeutet senkrecht zu einer Oberfläche des Schaumstoffs und/oder der Polsterung, insbesondere senkrecht zu einer Liegefläche der Matratze. Die Prüfvorrichtung umfasst ferner eine Messeinrichtung, die zur Messung einer Weglänge geeignet ist, die der Prüfstempel entlang der vertikalen Strecke bewegt oder bewegbar ist.

Die Erfindung betrifft außerdem ein Verfahren zur Prüfung der Stauchhärte von Schaumstoffen und oder Polsterungen, insbesondere von Matratzen.

Bei der Stauchhärte eines Schaumstoffs und/oder einer Polsterung, insbesondere einer Matratze handelt es sich um eine Kenngröße zur Wiedergabe der funktionellen Eigenschaften von Matratzen und dergleichen. Im Sinne der DIN EN 1957:2013-01 lässt sich die Matratzenhärte, die sogenannte Stauchhärte anhand der Einsinktiefe eines Prüfstempels in die Matratzenoberfläche sowie der dazu aufzuwenden Kraft ermitteln. Anders ausgedrückt beschreibt die Stauchhärte die Fähigkeit von Matratzen, nach einer Belastung wieder in die ursprüngliche Form zurückzukehren. Zur Messung der Stauchhärte sind bereits stationäre Prüfstände aus dem Stand der Technik bekannt. Derlei Prüfstände besitzen einen einzelnen Prüfstempel, der mittig auf der Liegefläche einer Matratze platziert und mit einer vorgegebenen Kraft beaufschlagt wird. Beispielsweise anhand einer Skala lässt sich die, Einsinktiefe, die von der aufgewandten Kraft abhängt, ablesen und hieraus die Stauchhärte bestimmen.

Eine zerlegbare und mobile Vorrichtung zur Messung der Stauchhärte ist aus der DE 20 2016 000 141 U1 bekannt. Die Vorrichtung umfasst eine Grundplatte, ein Führungsrohr sowie einen Stempel, der unterhalb der Grundplatte angeordnet ist und dessen Stil innerhalb des Führungsrohrs verschiebbar ist. Um die Stauchhärte einer Matratze zu messen wird die Grundplatte auf die Oberfläche bzw. Liegefläche der Matratze aufgelegt und der Stempel mit einem definierten Gewicht belastet. Die auf diese Weise aufgebrachte Druckkraft lässt den Stempel, relativ zur Grundplatte, in die Matratze einsinken. Die Einsinktiefe wird anhand einer Skala abgelesen.

Nachteilig an der mobilen Vorrichtung ist einerseits, dass eine präzise, normgerechte Messung nicht möglich ist, da es sowohl während des Ablesens der Einsinktiefe, als auch während des übrigen Messvorgangs aufgrund einer hohen Fehlerkette zu erheblichen Messfehlern kommen kann. Andererseits ist eine Messung der Stauchhärte sowohl mit einem aus dem Stand der Technik bekannten, stationären Prüfstand als auch mit dem mobilen Messgerät stets nur an einem Punkt der Matratze gleichzeitig möglich. Die Stauchhärte einer Matratze an verschiedenen Punkten lässt sich also lediglich durch aufeinander folgende Messvorgänge bestimmen, anders ausgedrückt müsste für jeden Messpunkt eine einzelne, separate Messung durchgeführt werden. Im Hinblick auf die Messung der funktionellen Eigenschaften einer sogenannten zonierten Matratze bzw. einer sogenannten Zonenmatratze führt dies zu einem erheblichen Zeitaufwand.

Aus der DE 101 08 372 A1 ist ein Verfahren zur Komfortbewertung von Sitz-, Liege- und Stützpolstern für Fahrzeugsitze bekannt. Hierzu werden flächig über den Prüfling verteilte Wegmesspunkte, welche die Form und Steifigkeit des Prüflings am Messpunkt repräsentieren ausgewertet. Die Messpunkte werden mit unterschiedlichen Kraftwerten beaufschlagt, um reale Belastungsprofile verschiedener Testpersonen nachzubilden. Die eingedrückten Wege der mit den Kraftwerten beaufschlagten Abtaststangen werden festgehalten und anhand der Messung eine Aussage über die Form und Steifigkeit des Prüflings getroffen.

Gemäß der Vornorm DIN SPEC 68200:2016-05 - Entwurf, handelt es sich bei einer zonierten Matratze bzw. einer Zonenmatratze um eine Matratze mit Zonen bzw. Bereichen unterschiedlicher Stauchhärte. Durch eine Zonierung, beispielsweise entlang der Längsrichtung einer Matratze kann das relative Einsinkverhalten bestimmter Körperregionen erhöht bzw. vermindert werden, was zu einer komfortableren und/oder physiologisch verbesserten Körperhaltung beim Liegen auf der Matratze führt.

Aufgabe der vorliegenden Erfindung ist es eine gegenüber dem Stand der Technik verbesserte Prüfvorrichtung anzugeben, die insbesondere auch zur zeitsparenden Messung der Stauchhärte einer zonierten Matratze gemäß der oben genannten Normen geeignet ist.

Die Aufgabe wird gelöst durch eine Vorrichtung gemäß Anspruch 1 sowie durch ein erfindungsgemäßes Verfahren.

Eine erfindungsgemäße Prüfvorrichtung der eingangs beschriebenen Art kennzeichnet sich dadurch, dass die Prüfvorrichtung zur Messung der Stauchhärte eines Schaumstoffs und/oder einer Polsterung mit mindestens zwei Zonen unterschiedlicher Stauchhärte, mindestens zwei Prüfstempel umfasst, wobei die Anzahl der Prüfstempel mindestens der Anzahl der Zonen entspricht und/oder jeder Zone zumindest ein Prüfstempel zugeordnet ist. Bei einer Kraft, mit der die Prüfstempel beaufschlagbar sind, kann es sich um eine beliebige, einstellbare Kraft handeln. Neben der Beaufschlagung mit einer Druck- und/oder Gewichtskraft ist insbesondere die Beaufschlagung mit einer pneumatisch und/oder hydraulisch erzeugten Kraft, einer (Elektro-)Motorisch erzeugten Kraft oder einer beliebigen Kombination der genannten Beispiele denkbar.

Vorteilhafte, beispielhafte Ausführungsformen sind in den jeweiligen Unteransprüchen beansprucht und werden nachfolgend näher erläutert.

So ist es beispielsweise zur Bestimmung der Verteilung der Zonen bzw. Zoneneinteilung eines Schaumstoffs und/oder einer Polsterung vorteilhaft, wenn die Prüfvorrichtung eine Vielzahl von Prüfstempeln umfasst, sodass jeder Zone des Schaumstoffs und/oder der Polsterung einer oder mehrere Prüfstempel zugeordnet sind. Als besonders vorteilhaft hat sich eine Anzahl an Prüfstempeln zwischen 15 und 20, insbesondere zur Vermessung einer Matratze mit sieben Zonen unterschiedlicher Stauchhärte erwiesen. Je mehr Prüfstempel die Prüfvorrichtung aufweist, desto genauer sind die Zoneneinteilung und/oder der Stauchhärteverlauf eines Schaumstoffs und/oder einer Polsterung bestimmbar.

Um eine möglichst realitätsnahe Messung der Stauchhärte eines Schaumstoffs und/oder einer Polsterung durchführen zu können, sind die Prüfstempel zeitgleich mit der einstellbaren Kraft beaufschlagbar. Auf diese Weise lässt sich eine gegenseitige Beeinflussung benachbarter Prüfstempel erzeugen, wodurch der Einfluss einer Oberflächenspannung, die entlang der Oberfläche des Schaumstoffs und/oder der Polsterung auftritt berücksichtigt wird. Anders ausgedrückt kann derart ein menschlicher Körper, dessen Gewichtskraft auf eine Vielzahl von Punkten und/oder Bereichen entlang der Oberfläche des Schaumstoffs und/oder der Polsterung verteilt ist, simuliert werden. Zur Durchführung von Vergleichsmessungen und/oder Prüfmessungen können die Prüfstempel jeweils mit derselben, eingestellten Kraft beaufschlagt werden, zur Durchführung von realitätsnahen, anwendungsorientierten Messungen jeweils mit einer individuell eingestellten Kraft. Es hat sich als vorteilhaft erwiesen, zwei einander benachbarte Prüfstempel mit einem Abstand zueinander anzuordnen, der der Größe einer Druckfläche des Prüfstempels zumindest in etwa entspricht. Beispielsweise entspricht der Abstand zueinander benachbarter Prüfstempel mit einer kreisrund ausgeführten Druckfläche, dem Durchmesser der kreisrunden Druckfläche.

Zweckmäßigerweise umfasst die Prüfvorrichtung einen oder mehrere Messbalken, wobei sich der eine oder die mehreren Messbalken von einem ersten Ende des Schaumstoffs und/oder der Polsterung, beispielsweise einem Kopfende einer Matratze bis hin zu einem zweiten Ende des Schaumstoffs und/oder der Polsterung, beispielsweise einem Fußende der Matratze erstreckt. Die Prüfstempel sind vorzugsweise entlang des Messbalkens angeordnet bzw. aneinandergereiht.

Gemäß einer vorteilhaften Ausführung sind die mehreren Messbalken in einer Ebene nebeneinander im Wesentlichen parallel zueinander angeordnet. Durch die Verwendung mehrerer Messbalken mit jeweils einer Vielzahl von Prüfstempeln ist eine flächendeckende Messung der Stauchhärte des Schaumstoffs und/oder der Polsterung in einem einzigen Messvorgang zu realisieren. Optional oder alternativ ist der eine oder sind die mehreren Messbalken in einer horizontalen Richtung, d.h. entlang einer Ebene parallel zur Oberfläche des Schaumstoffs und/oder der Polsterung verfahrbar. Auf diese Weise lässt sich eine flächendeckende Messung mit mehreren, aufeinanderfolgenden Messvorgängen realisieren. Herkömmliche Zonenmatratzen sind ausschließlich in einer Längsrichtung, d.h. von einem Kopf- zu einem Fußende hin zoniert, sodass die Verwendung eines einzigen Messbalkens zur Prüfung des längsgerichteten Stauchhärteverlaufs einer solchen Matratze ausreichend ist.

Beispielsweise zur Einleitung eines Messvorgangs sind der eine oder die mehreren Messbalken ausgehend von einer Ausgangsposition vertikal in Richtung des zu prüfenden Schaumstoffs und/oder der zu prüfenden Polsterung hin zu einer Messposition absenkbar, d.h. die Messbalken sind in einer Richtung senkrecht zur Oberfläche des Schaumstoffs und/oder der Polsterung verfahrbar. So ist es vorteilhaft, den Messbalken vor Beginn eines Messvorgangs von der Ausgangsposition in eine Messposition abzusenken, in der mindestens ein Prüfstempel kraftfrei, d. h. ohne Kraftübertragung an der Oberfläche des Schaumstoffs und/oder der Polsterung anliegt. Die Messposition dient als Referenz zur Ermittlung der Einsinktiefe der Prüfstempel in die Oberfläche des Schaumstoffs und/oder der Polsterung.

Nach einem optionalen Ausführungsbeispiel ist die einstellbare Kraft, mit der die Prüfstempel beaufschlagt werden, mittels einer Druckluft erzeugbar. Vorzugsweise sind die Prüfstempel entlang eines Messbalkens bezüglich der Druckluft in Reihe geschaltet und die Messbalken bezüglich der Druckluft zueinander parallel geschaltet. Die Verbindungen zwischen einander benachbarten Prüfstempeln sind zum Beispiel mittels Schläuchen ausgeführt. Aufgrund der Reihenschaltung werden die Prüfstempel entlang eines Messbalkens nacheinander bzw. zeitversetzt mit der Druckluft beaufschlagt. Zum Ausgleich und um eine zeitgleiche Messung aller Prüfstempel durchzuführen, kann dem eigentlichen Messvorgang eine Messverzögerung, d.h. eine beliebig einstellbare Wartezeit vorgeschaltet sein.

Nach einem weiteren, optionalen Ausführungsbeispiel ist die einstellbare Kraft, die auf die Prüfstempel wirkt, mittels einer Massenbeaufschlagung erzeugbar. Hierzu kann jeder Prüfstempel mit einem identischen oder individuellen Prüfgewicht versehen sein oder ein identisches oder individuelles Prüfgewicht aufweisen. Vor Beginn der Messung wird der Messbalken in die Messposition abgesenkt, die Gewichtskraft der Prüfgewichtstempel wirkt ausschließlich auf den Messbalken. Zur Einleitung des Messvorgangs werden die Prüfgewichtstempel freigegeben, sodass deren Gewichtskraft auf die Oberfläche des Schaumstoffs und/oder der Polsterung wirkt. Je nach Gewicht bzw. Stauchhärte des Schaumstoffs und/oder der Polsterung sinken die Prüfgewichtstempel unterschiedlich tief in die Oberfläche ein. Zum Ausgleich voneinander abweichender Eindringzeiten kann der Einsinktiefenmessung eine Messverzögerung vorgeschaltet sein. Ebenfalls denkbar ist eine Kombination von Massen- und DruckluftBeaufschlagung.

Ein vorteilhaftes Ausführungsbeispiel sieht vor, dass die Messeinrichtung als optisch arbeitende Abstandsmesseinrichtung, die zur berührungslosen Messung geeignet ist, insbesondere als Laserentfernungs-Messeinrichtung, ausgeführt ist. In vorteilhafter Ausgestaltung umfasst jeder Messbalken eine optische Abstandsmesseinrichtung, die oberhalb der Prüfstempel angeordnet ist und entlang des Messbalkens verfahrbar ist, um die jeweiligen Weglängen, um die die Prüfstempel in die Oberfläche des Schaumstoffs und/oder der Polsterung eingesunken sind, zu messen.

Zur Auslesung und/oder Verarbeitung und/oder Regelung der erhaltenen Messgrößen bezüglich der eingestellten Prüfparameter und/oder zur Steuerung der Prüfvorrichtung kann die Prüfvorrichtung mit einem Prozessrechner verbunden werden. Insbesondere handelt es sich bei dem Prozessrechner um eine speicherprogrammierbare Steuerung, die wiederum mit einem PC verbunden werden kann um einerseits die Steuerung zu programmieren und andererseits das aus den Messgrößen erhaltene Prüfergebnis anzuzeigen.

Vorzugsweise liegt eine Messungenauigkeit bzw. ein Messfehler der Einsinktiefenmessung bei höchstens +/- 0,1 mm, womit die Prüfvorrichtung zur Durchführung einer Stauchhärteprüfung entsprechend den Normen DIN EN 1957:2013-01 und DIN SPEC 68200:2016-05 - Entwurf geeignet ist.

Gemäß einem optionalen Ausführungsbeispiel weist die Prüfvorrichtung einen zusätzlichen Referenz-Prüfstempel auf, der zur Messung der eingestellten und/oder zur Regelung der einstellbaren Kraft geeignet ist. Der Referenzstempel kann hierzu auf eine Kraftmesszelle wirken, die die gemessene Krafteinwirkung zur Regelung der einstellbaren Kraft beispielsweise an eine speicherprogrammierbare Steuerung weiterleitet.

Ein erfindungsgemäßes Verfahren zur Messung und/oder Prüfung der Stauchhärte von Schaumstoffen und/oder Polsterungen, insbesondere von Matratzen umfasst folgende Schritte. Zum Ausrichten einer Prüfvorrichtung nach einer der zuvor beschriebenen Ausführungsformen bezüglich des zu prüfenden Schaumstoffs und/oder der zu prüfenden Polsterung wird ein Messbalken der Prüfvorrichtung insbesondere mittig oberhalb des Schaumstoffs und/oder der Polsterung platziert. Der Messbalken, welcher mindestens zwei Prüfstempel aufweist, wird derart in Richtung des Schaumstoffs und/oder der Polsterung abgesenkt, dass mindestens einer der Prüfstempel, genauer eine Druckfläche dieses Prüfstempels, kraftfrei, d.h. ohne Krafteinwirkung berührend an einer Oberfläche des Schaumstoffs und/oder der Polsterung anliegt. Vorzugsweise wird der Messbalken in der entsprechenden Position, einer Messposition fixiert.

Vor dem Beginn eines Messvorgangs können unterschiedliche Prüfparameter, wie Anzahl der Messungen, Dauer der Messverzögerung sowie die Kraft, die auf die Prüfstempel wirken soll eingestellt werden. Zum Messbeginn werden die Prüfstempel mit der zuvor eingestellten Kraft beaufschlagt und sinken hierdurch in die Oberfläche des Schaumstoffs und/oder der Polsterung ein. Die Kraftbeaufschlagung erfolgt insbesondere durch Druckluft und/oder durch das Auflegen bzw. Freigeben von Gewichten. Gegebenenfalls nach Ablauf einer Wartezeit, der sogenannten Messverzögerung wird die Einsinktiefe, das heißt die Weglänge, um die der jeweilige Prüfstempel in die Oberfläche des Schaumstoffs und/oder der Polsterung eingesunken ist gemessen. Hierzu kann eine optische Abstandsmesseinrichtung, insbesondere eine Laserentfernungs-Messeinrichtung verwendet werden. Abschließend werden die erhaltenen Messgrößen, insbesondere die Einsinktiefe im Hinblick auf die zuvor eingestellten Prüfparameter, insbesondere die Kraftbeaufschlagung und die Druckfläche des Prüfstempels mittels eines Prozessrechners verarbeitet und/oder ausgewertet. Die Gesamtdauer eines Messvorgangs liegt bei in etwa zehn Minuten zuzüglich der eingestellten Messverzögerung, wobei die eigentliche Messdauer, d.h das Einsinken der Prüfstempel und das Auslesen der Einsinktiefe in etwa drei Minuten beträgt.

Bei Verwendung von bspw. einem Messbalken mit 19 Prüfstempeln ist die Stauchhärte eines Schaumstoffs und/oder einer Polsterung, insbesondere einer Matratze, innerhalb der Dauer des Messvorgangs an 19 unterschiedlichen Punkten bzw. Abschnitten gleichzeitig messbar. Auf diese Weise lässt sich ein vollständiges Profil der Stauchhärte in Längsrichtung, ausgehend von einem ersten (Kopf)-Ende hin zu einem zweiten (Fuß)-Ende ermitteln. Durch Verwendung mehrere paralleler Messbalken kann das ermittelte Profil innerhalb einer identischen Messdauer auch in Querrichtung erstreckt werden.

Weitere Einzelheiten, Merkmale, Merkmals(unter) kombinationen, Vorteile und Wirkungen auf der Basis der Erfindung ergeben sich aus der nachfolgenden Beschreibung eines bevorzugten Ausführungsbeispiels der Erfindung und den Zeichnungen. Diese zeigen in
- Fig. 1: eine perspektivische Ansicht einer erfindungsgemäßen Prüfvorrichtung mit Druckluftbeaufschlagung sowie eine zu prüfende Polsterung,
- Fig. 2: die Prüfvorrichtung aus Figur 1 in einer seitlichen Darstellung,
- Fig. 3: die Prüfvorrichtung aus Figur 1 aus Sicht eines ersten (Kopf)-Endes
- Fig. 4: ein beispielhaftes Einsinktiefen-Profil, das zur Ermittlung eines Stauchhärte-Profils herangezogen wird,
- Fig. 5a, b: eine alternative Ausführungsform eines Prüfstempels, der mit einer Gewichtskraft beaufschlagt ist,
- Fig. 6: eine alternative Ausführungsform einer Prüfvorrichtung mit 3 optischen Sensoren in perspektivischer Darstellung,
- Fig. 7: die alternative Ausführungsform gemäß Fig. 6 in einer seitlichen Darstellung,
- Fig. 8: eine zweite alternative Ausführungsform eines Prüfstempels, insbesondere zur Verwendung mit einer erfindungsgemäßen Prüfvorrichtung.

Die Figuren sind lediglich beispielhafter Natur und dienen nur dem Verständnis der Erfindung. Gleiche Merkmale sind mit denselben Bezugszeichen versehen.

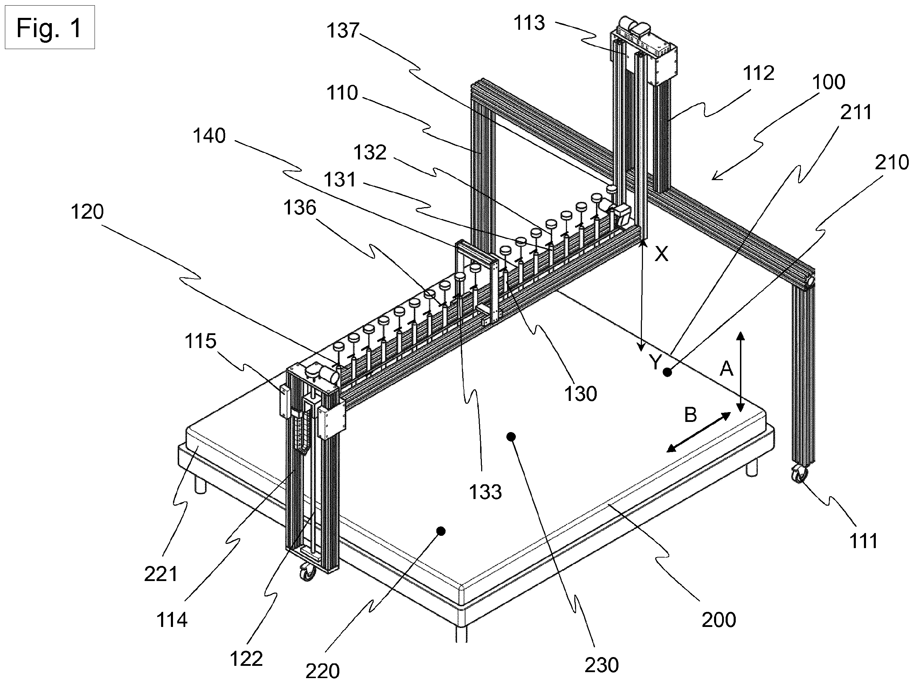

Fig. 1 zeigt eine perspektivische Darstellung einer erfindungsgemäßen Prüfvorrichtung 100 mit Druckluftbeaufschlagung sowie eine zu prüfende Polsterung 200. Die Polsterung 200 umfasst zumindest eine kopfseitige, erste Zone 210, die eine erste Stauchhärte aufweist sowie eine fußseitige, zweite Zone 220, die eine zweite, von der ersten Stauchhärte abweichende Stauchhärte aufweist. Die Prüfvorrichtung 100 umfasst ein Grundgestell 110, welches auf arretierbaren Rollen 111 montiert ist. Mit dem Grundgestell 110 ist ein kopfseitiges, erstes Führungsprofil 112, das zur Führung eines kopfseitigen, ersten Führungsschlittens 113 geeignet ist, verbunden. Ein fußseitiges, zweites Führungsprofil 114 ist zur Führung eines fußseitigen, zweiten Führungsschlittens 115 geeignet. Zwischen den Führungsschlitten 113, 115 angeordnet und fest mit diesen verbunden ist ein Messbalken 120. Der Messbalken 120 ist mittels der Führungsschlitten 113, 115 höhenverstellbar bzw. entlang einer vertikalen Richtung A verfahrbar. Ausgehend von einer Ausgangsposition X kann der Messbalken 120 zur Einleitung eines Messvorgangs in Richtung einer Oberfläche 230 der Polsterung 200 in eine Messposition Y abgesenkt werden. Vorzugsweise wird der Messbalken 120 mithilfe eines Elektromotors (nicht dargestellt) angetrieben. Die Ausgangsposition X ist ausreichend hoch gewählt, sodass die Prüfvorrichtung 100 auch zur Messung von höheren Matratzen, Betten oder sonstigen gepolsterten Möbeln verwendbar ist. Um den Messbalken 120 in beliebiger Position halten zu können ist dieser mit einer ersten Gewindestange 121 und einer zweiten Gewindestange 122 verbunden.

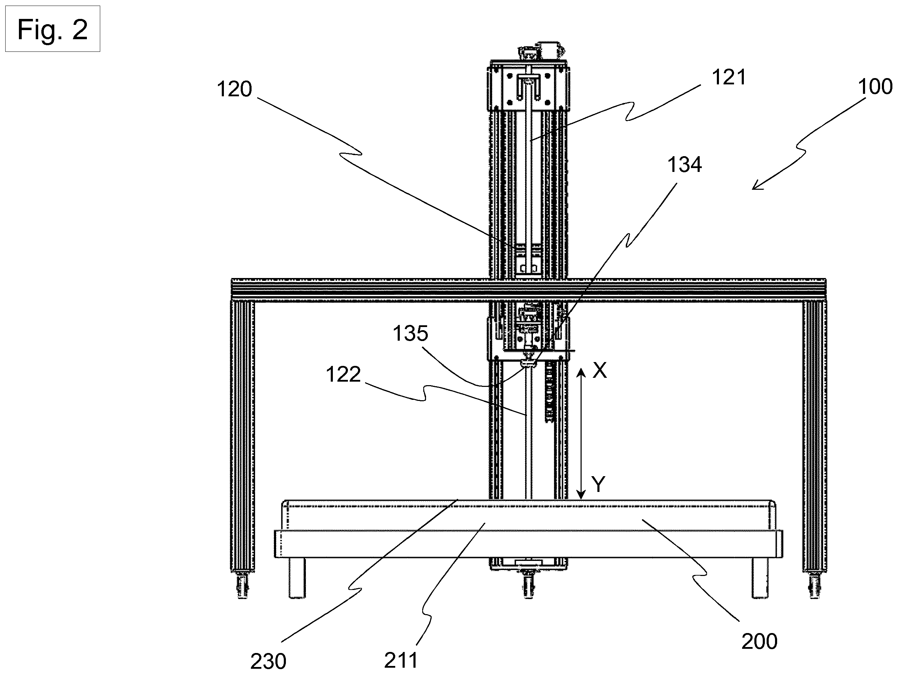

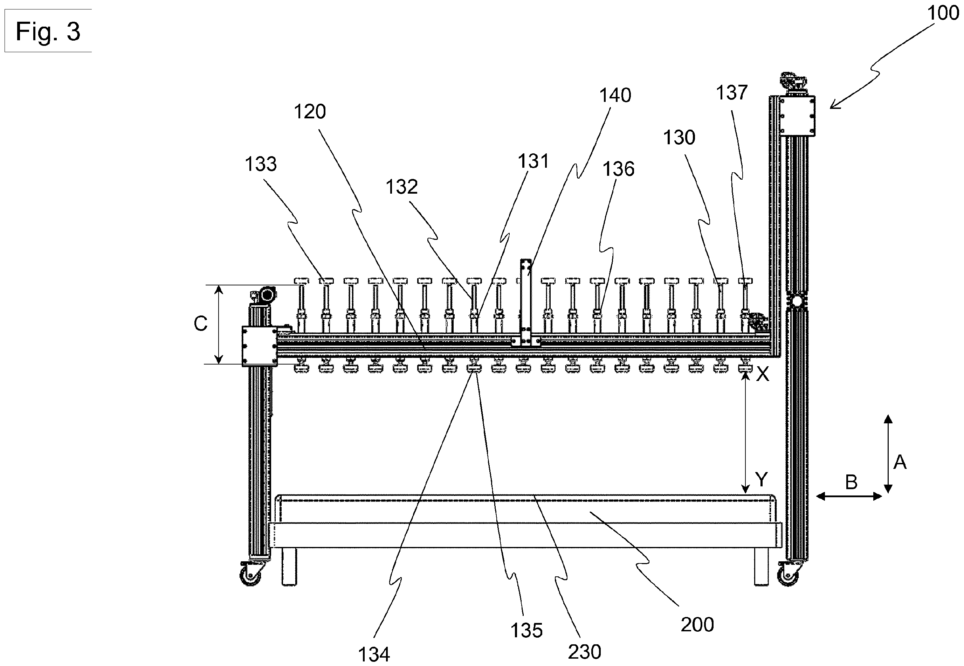

Entlang des Messbalkens 120 sind insgesamt 19 Prüfstempel 130 in einer Reihe angeordnet. Jeder der Prüfstempel 130 umfasst einen Zylinder 131, einen darin gleitenden Kolben 132 mit einem Messteller 133 an dessen einem Ende und einem Druckstempel 134 mit einer Druckfläche 135 (siehe Figuren 2,3) an dessen gegenüberliegendem Ende, sowie einen Druckluftanschluss 136. Die Druckluftanschlüsse 136 können beispielsweise mittels Schläuchen miteinander verbunden werden, sodass die Prüfstempel 130 zur Beaufschlagung mit Druckluft in Reihe geschaltet sind. Die Druckluftzufuhr befindet sich insbesondere im Bereich eines ersten Prüfstempels 137, der dem kopfseitigen, ersten Ende 211 der Polsterung 200 zugeordnet ist.

Eine Messeinrichtung 140 ist oberhalb der Prüfstempel 130 bzw. der Messteller 133 angeordnet. Die Messeinrichtung 140 ist entlang des Messbalkens 120 in einer horizontalen Richtung B verfahrbar. Die Messeinrichtung 140 umfasst einen Laser, dessen Strahl senkrecht in Richtung der Messteller 133 gerichtet ist. Der Laserstrahl wird durch den Messteller 133 reflektiert, sodass der Abstand zwischen der Messeinrichtung 140 und dem jeweiligen Messteller 133 mittels entsprechender Sensoren gemessen werden kann.

In Figur 2 ist die Prüfvorrichtung 100 gemäß Figur 1 aus Sicht des kopfseitigen, ersten Endes 211 der Polsterung 200 dargestellt. Der Messbalken 120 ist in der Ausgangsposition X mittig oberhalb der Polsterung 200 positioniert. Vor Beginn der Messung wird der Messbalken 120 entlang der Gewindestangen 121, 122 in Richtung der Oberfläche 230 der Polsterung 200 in die Messposition Y abgesenkt. Der Messbalken 120 wird derart fixiert, dass mindestens eine Druckfläche 135 eines Druckstempels 134 kraftfrei berührend an der Oberfläche 230 der Polsterung 200 anliegt.

Figur 3 zeigt die Prüfvorrichtung 100 sowie die Polsterung 200 in einer seitlichen Darstellung. Der Messbalken 120 befindet sich wiederum in der Ausgangsposition X, auf die Prüfstempel 130 wirkt noch keine Kraft ein. Im vorliegenden Ausführungsbeispiel sind die Druckstempel 134 zylindrisch ausgeführt, der Abstand zweier Druckstempel 134 zueinander entspricht in etwa dem Durchmesser eines Druckstempels 134, der beispielsweise 50,0 mm beträgt. Die Prüfstempel 130 sind entlang einer vertikalen Richtung A um eine Strecke C bewegbar, wobei der Kolben 132 innerhalb des Zylinders 131 gleitet. Die Länge der Strecke C entspricht folglich in etwa der Länge des Kolbens 132.

Wie zuvor beschrieben wird vor Beginn der Messung der Messbalken 120 ausgehend von der Ausgangsposition X in eine Messposition Y abgesenkt und arretiert. Zum Start der Messung werden die Prüfstempel 130 mittels der Druckluftanschlüsse 136 mit Druckluft bzw. einer Kraft beaufschlagt. Die einwirkende Kraft wird über die Druckfläche 135 des Druckstempels 134 an die Oberfläche 230 der Polsterung 200 übertragen. Je nach Härtegrad bzw. Stauchhärte der Polsterung 200, der eingestellten Kraft sowie der Größe der Druckfläche 135 sinkt der Druckstempel 134 um eine Weglänge, nämlich die Einsinktiefe in die Polsterung 200 ein. Zur Messung der Einsinktiefe fährt die Messeinrichtung 140 ausgehend vom ersten Prüfstempel 137 entlang des Messbalkens 120 und misst den jeweiligen Abstand zum Messteller 133 des entsprechenden Prüfstempels 130. Der gemessene Abstand wird in Relation zu einem Ausgangsabstand, der einer Einsinktiefe von 0,0 mm entspricht gesetzt. Die ermittelten Messgrößen können mittels einer speicherprogrammierbaren Steuerung (nicht dargestellt) als Einsinktiefen-Profil oder unter Berücksichtigung der einstellbaren Prüfparameter, wie Kraftbeaufschlagung direkt als Stauchhärte-Profil der Polsterung 200 ausgegeben werden.

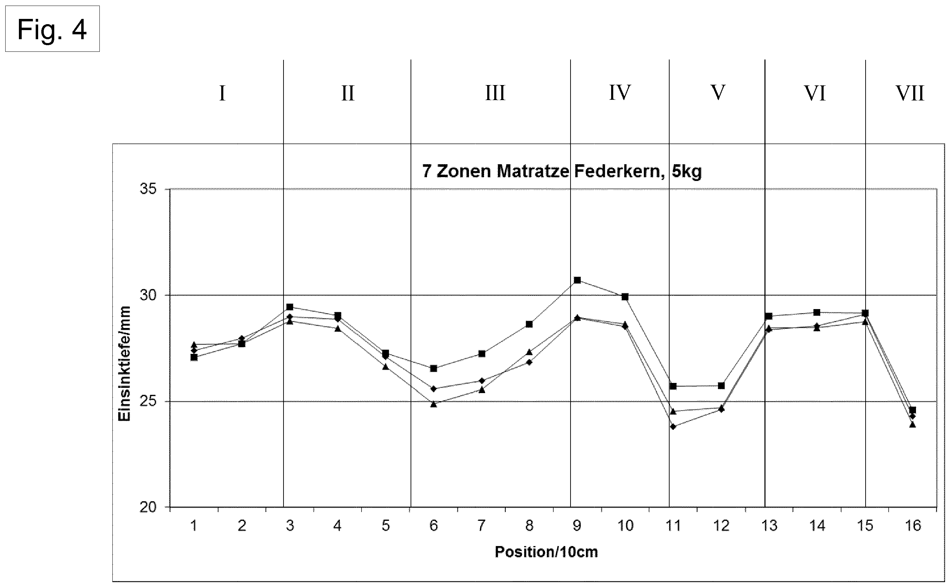

In Figur 4 ist ein beispielhaftes Einsinktiefen-Profil einer 7 Zonen-Federkernmatratze dargestellt. Es wurden drei aufeinanderfolgende Messungen mit jeweils 19 Prüfstempeln 130 durchgeführt, wobei die Prüfstempel 130 jeweils mit einer Gewichtskraft von 5 kg beaufschlagt wurden. Dem Profil kann sowohl die Verteilung der Zonen I bis VII sowie die Einsinktiefe innerhalb der jeweiligen Zone entnommen und daraus die sich ergebenden Stauchhärten ermittelt werden.

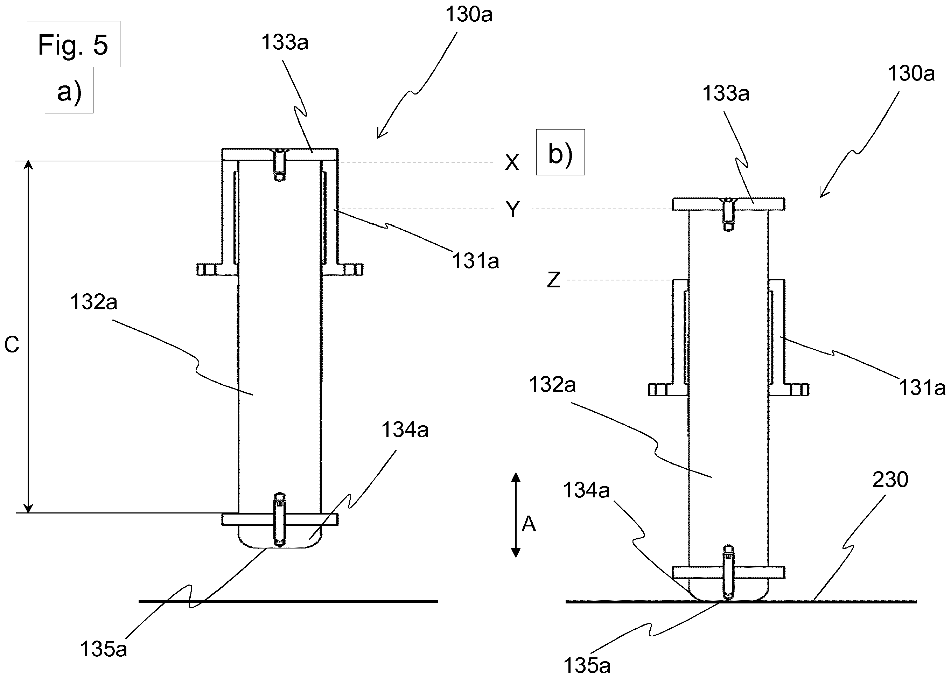

Die Figuren 5a, b zeigen eine seitliche Ansicht einer alternativen Ausführung eines Prüfstempels 130 für eine erfindungsgemäße Prüfvorrichtung 100 in einer seitlichen Darstellung. Der Prüfgewichtstempel 130a ist zur Erzeugung einer Gewichtskraft mit einer Masse bzw. einem Gewicht versehen. Als Gewicht dient ein im Wesentlichen rotationssymmetrischer Druckkörper 132a, dessen Masse der einstellbaren Kraft entspricht und insbesondere 5 kg beträgt. Der Druckkörper 132a ist entlang einer vertikalen Richtung A innerhalb einer Führungshülse 131a nahezu reibungslos oder zumindest reibungsarm entlang einer Strecke C bewegbar. Die Führungshülste 131a ist fest mit dem Messbalken 120 verbunden. An einem oberen Ende weist der Druckkörper 132a einen Messteller 133a auf, der auf der Führungshülse 131a aufliegt, sofern sich der Messbalken 120 in der Ausgangsposition X befindet (gemäß Fig. 5a). An einem unteren Ende weist der Druckkörper 132a eine Druckfläche 135a auf, mit der die Gewichtskraft auf die Oberfläche 230 einer zu prüfenden Polsterung 200 übertragbar ist. Sowohl ein Druckstück 134a, welches die Druckfläche 135a aufweist, als auch der Messteller 133a sind über Schraubverbindungen mit dem Druckkörper 132a verbunden. Die Geometrie des Druckstücks 134a entspricht der chinesischen Norm GB/T 10357.6-2013. Das Druckstück 134a weist einen Durchmesser von 50,0 mm sowie eine kreisförmige, abgerundete Kante auf, wobei der Radius der Rundung 12 mm beträgt. Zur Durchführung einer Messung wird der Messbalken 120 ausgehend von der Ausgangsposition X in eine Messposition Y abgesenkt, wobei mindestens eine Druckfläche 135a eines Druckkörpers 132a kraftfrei auf der Oberfläche 230 der Polsterung 200 aufliegt. Die Länge der Druckkörper 132a ist hierbei so gewählt, dass der Messbalken 120 in der Messposition Y einen Abstand von vorzugsweise 300 mm zur Oberfläche 230 der Polsterung 200 aufweist. Zur Durchführung der Messung wird der Messbalken 120 zusammen mit der Führungshülse 131a bis zu einer zweiten Messposition Z weiter abgesenkt, wobei die Druckkörper 132a aufgrund des Widerstands bzw. der Stauchhärte der Polsterung 200 aus deren Führungshülsen 131a herausgedrückt werden. Je härter die Polsterung 200 bzw. je höher die Stauchhärte der Polsterung 200 ist, desto weiter werden die Druckkörper 132a aus den Führungshülsen 131a herausgedrückt bzw. desto geringer ist der Abstand zwischen der Messeinrichtung 140 und den jeweiligen Messtellern 133a. Die Abstandsmessung mittels der Messeinrichtung 140 sowie die Auswertung der Messgrößen erfolgt in oben beschriebener Weise.

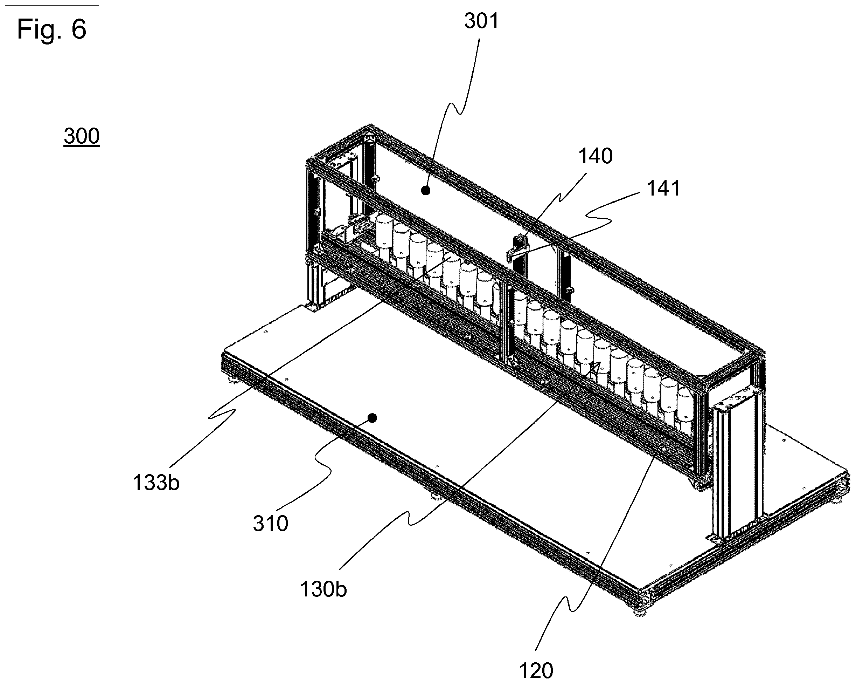

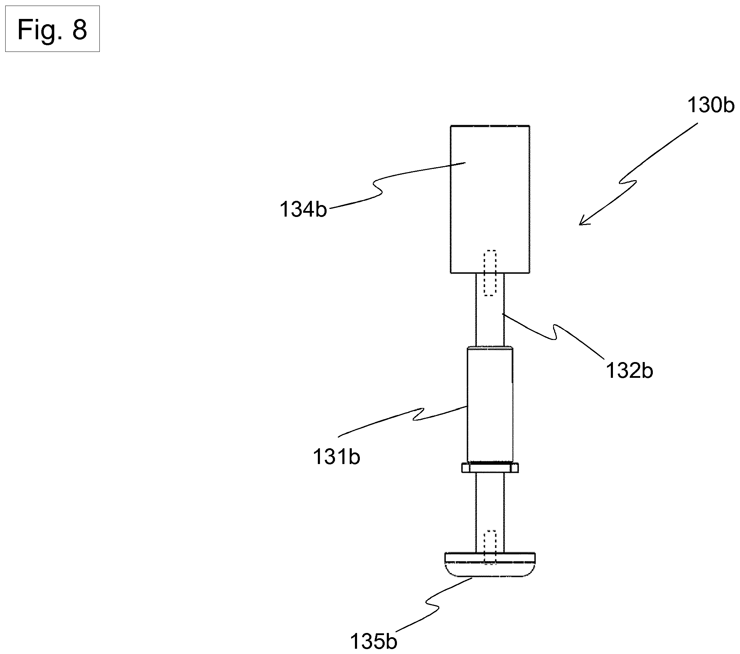

Figur 6 zeigt eine beispielhafte, alternative Ausführungsform 300 einer Prüfvorrichtung 100 in einer perspektivischen Darstellung. Die alternative Ausführungsform 300 entspricht im Wesentlichen der zuvor beschriebenen Ausführungsform, unterscheidet sich jedoch in nachfolgenden Merkmalen. Die alternative Prüfvorrichtung 300 umfasst einen Messbalken 120 mit 19 Gewichtsstempeln 130b, die entlang des Messbalkens 120 angeordnet sind. Zur Ausgestaltung und Funktion der Gewichtsstempel 130b siehe Figur 8. Die alternative Prüfvorrichtung 300 weist eine Bodenplatte 310 zur Auflage der zu messenden Polsterung 200 auf. Der Messbalken 120 ist mit einem einsehbaren Gehäuse 301, vorzugsweise aus Plexiglas oder einem ähnlichen, geeigneten Material versehen, welches als trennende Schutzeinrichtung fungieren kann. Eine Messeinrichtung 140 umfasst einen ersten optischen Sensor 141, der entlang des Messbalkens 120 verfahrbar ist. Zur Durchführung der Stauchhärtemessung fährt der erste optische Sensor 141 nacheinander jeden der Gewichtsstempel 130b einzeln ab um bspw. mittels einer Laser-Abstandsmessung den Abstand zwischen einer Messoberfläche 133b des jeweiligen Gewichtsstempels 130b und der Messeinrichtung 140 zu ermitteln. Aus den ermittelten Abständen ergibt sich das Stauchhärteprofil der Polsterung 200.

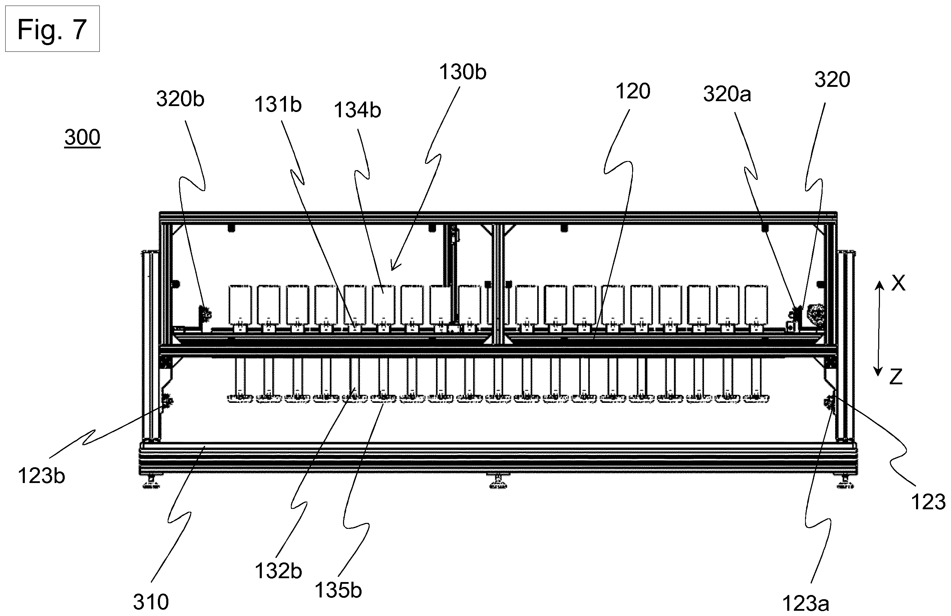

In Figur 7 ist die alternative Prüfvorrichtung 300 in einer seitlichen Ansicht dargestellt. Die alternative Prüfvorrichtung 300 umfasst einen zweiten optischen Sensor 123, der zur Messung der Höhe der zu prüfenden Polsterung 200 ausgebildet ist. Der zweite optische Sensor 123 ist mit einem unteren Abschnitt des Messbalkens 120 verbunden. Zu Beginn eines Messvorgangs befindet sich der Messbalken 120 in einer Ausgangsposition X. Die Polsterung 200 wird unterhalb des Messbalkens 120 auf der Bodenplatte 310 positioniert. Durch Starten des Messvorgangs senkt sich der Messbalken 120 in Richtung der Polsterung 200. Der zweite optische Sensor 123, welcher bspw. als Lichtschranke, insbesondere als Laserlichtschranke ausgebildet ist, wird gleichzeitig mit dem Messbalken 120 abgesenkt. Der Abstand zwischen dem zweiten optischen Sensor 123 und einer unteren Druckfläche 135b der Gewichtsstempel 130b ist in einem Prozessrechner hinterlegt. Die Lichtschranke 123 verläuft zwischen einer Lichtquelle 123a, die an einem ersten Ende des Messbalkens angeordnet ist und einem Lichtsensor 123b, der an einem zweiten Ende des Messbalkens angeordnet ist. Sobald der höchste Punkt der Polsterung 200 die Lichtschranke 123 durchbricht, wird der Messbalken 120 für bspw. 5 Sekunden angehalten und die so ermittelte Höhe der Polsterung 200 ebenfalls im Prozessrechner hinterlegt. Die Höhenmessung kann durch einen Seilzugsensor, der mit dem optischen Sensor 123 verbunden ist mit einer Genauigkeit von 0,1 mm - 0,01 mm erfolgen.

Ein dritter optischer Sensor 320 ist zur Ermittlung einer zweiten Messposition Z mit dem Messbalken 120 verbunden. Der dritte optische Sensor 320 ist vorzugsweise als Lichtschranke, insbesondere als Laser-Lichtschranke ausgeführt. Die Lichtschranke 320 verläuft zwischen einer Lichtquelle 320a und einem Lichtsensor 320b. Solange die zweite Messposition Z noch nicht erreicht ist, ist die Lichtschranke durch zumindest einen Gewichtskopf 134b unterbrochen. Die Lichtquelle 320a und der Lichtsensor 320b sind derart angeordnet, dass die Lichtschranke leicht versetzt zur Mittelachse der Gewichtsstempel 130b, im unteren Bereich der Gewichtsköpfe 134b verläuft. Nachdem die Höhe der Polsterung 200 erfasst wurde, senkt sich der Messbalken 120 automatisch weiter ab. Hierdurch kommen die Druckflächen 135b auf der Oberfläche der Polsterung 200 zum Aufliegen. Je nach Härtegrad der Polsterung 200 am jeweiligen Messpunkt wird der Gewichtskopf 134b aufgrund des Widerstands der Polsterung 200 nach oben versetzt. Der Gewichtskopf 134b ist hierzu mit einer als Kolben ausgebildeten Führungswelle 132b, die nahezu reibungslos in einer als Zylinder ausgebildeten Führungshülse 131b läuft verbunden (siehe hierzu auch Figur 8). Der Durchmesser der Führungswelle 132b ist kleiner als der Durchmesser des Gewichtskopfs 134b. Indem die Lichtschranke 320 versetzt zur Mittelachse des Gewichtsstempels 130b angeordnet ist, wird deren Verlauf frei, sobald alle Gewichtsköpfe 134b aus ihren jeweiligen Führungshülsen 131b herausgehoben bzw. nach oben versetzt sind. Sobald die Lichtschranke 320 nicht mehr durchbrochen ist, startet die Abstandsmessung mittels des ersten optischen Sensors 141. Zur Bestimmung des Stauchhärte-Profils werden die Messergebnisse von der zuvor bestimmten Höhe der Polsterung 200 abgezogen.

In Figur 8 ist eine zweite alternative Ausführungsform eines Prüfstempels 130 schematisch dargestellt. Der Gewichtsstempel 130b ist insbesondere zur Verwendung mit den Prüfvorrichtungen 100 und 300 geeignet. Der Gewichtsstempel 130b umfasst ein Gewichtskopf 134b, der vorzugsweise eine Gewichtskraft von 5 kg aufbringt und mit einem ersten Ende der Führungswelle 132b verbunden ist. Die Führungswelle 132b ist vorzugsweise aus gehärtetem Stahl gefertigt. An ein zweites Ende der Führungswelle 132b schließt sich ein Druckstück mit einer Druckfläche 135b an. Die Druckfläche 135b ist zur Auflage auf die Oberfläche der Polsterung 200 ausgebildet und entspricht insbesondere in ihren Abmessungen den oben aufgeführten Normen. Zwischen Gewichtskopf 134b und Druckstück ist eine Führungshülse 131b angeordnet, die die Führungswelle 132b umschließt. Die Führungshülse 131b ist mit einer Präzisionskugelumlaufführung auf der Führungswelle 132b gelagert, wodurch diese nahezu reibungslos entlang der Führungswelle 132b gleitet. Die Figur 8 zeigt den Gewichtsstempel 130b in einer zweiten Messposition Z, in welcher die Druckfläche 135b auf der Oberfläche der Polsterung 200 aufliegt. Durch den Widerstand der Polsterung 200 wird der Gewichtskopf 134b von der Führungshülse 131b gehoben. Je höher der Widerstand, d.h. die Stauchhärte der Polsterung 200 desto weiter wird der Gewichtskopf 134b angehoben. Aufgrund der nahezu reibungsfreien Führung der Führungswelle 132b innerhalb der Führungshülse 131b wirkt die Widerstandskraft der Polsterung 200 in der zweiten Messposition Z als einzige Kraft der Gewichtskraft des Gewichtskopfs 134b entgegen. Dies ermöglicht eine äußerst exakte Messung der Stauchhärte an der jeweiligen Messposition zur Ermittlung des Stauchhärte-Profils.

Der zuvor beschriebene Messvorgang erfolgt vollautomatisch. Ein vollständiges Stauchhärte-Profil lässt sich so innerhalb von ca. 2 Minuten mit äußerster Genauigkeit und Reproduzierbarkeit ermitteln. Die Messergebnisse werden mittels eines Prozessrechners erfasst und können direkt abgelesen und/oder elektronisch übertragen werden. Die Abmessungen, Gewicht und Anzahl der Gewichtsstempel 130b sind den Konturen eines menschlichen Körpers nachempfunden. Das Gesamtgewicht mit dem die Polsterung 200 belastet wird entspricht vorzugsweise 95 kg. Es ist ebenfalls möglich Gewichtsstempel 130b mit unterschiedlichen Gewichten zu verwenden sowie das Gesamtgewicht zu variieren. Mittels der vorliegenden Prüfvorrichtung lässt sich somit ein kostengünstiges, schnelles und automatisiertes Verfahren zur Messung eines Stauchhärte-Profils von Polsterungen 200 durchführen.

### Bezugszeichenliste

- 100: Prüfvorrichtung
- 110: Grundgestell
- 111: arretierbare Rollen
- 112: erstes Führungsprofil
- 113: erster Führungsschlitten
- 114: zweites Führungsprofil
- 115: zweiter Führungsschlitten
- 120: Messbalken
- 121: erste Gewindestange
- 122: zweite Gewindestange
- 123: zweiter optischer Sensor
- 123a: Lichtquelle
- 123b: Lichtsensor
- 130: Prüfstempel
- 131: Zylinder
- 132: Kolben
- 133: Messteller
- 134: Druckstempel
- 135: Druckfläche
- 136: Druckluftanschluss
- 137: erster Prüfstempel
- 130a: Prüfgewichtstempel
- 131a: Führungshülse
- 132a: Druckkörper
- 133a: Messteller
- 134a: Druckstück
- 135a: Druckfläche
- 130b: Gewichtsstempel
- 131b: Führungshülse
- 132b: Führungswelle
- 133b: Messoberfläche
- 134b: Gewichtskopf
- 135b: Druckfläche
- 140: Messeinrichtung
- 141: erster optischer Sensor
- 200: Polsterung
- 210: erste Zone
- 211: erstes Ende
- 220: zweite Zone
- 221: zweites Ende
- 230: Oberfläche
- 300: alternative Prüfvorrichtung
- 301: Gehäuse
- 310: Bodenplatte
- 320: dritter optischer Sensor
- 320a: Lichtquelle
- 320b: Lichtsensor
- A: vertikale Richtung
- B: horizontale Richtung
- C: Strecke
- X: Ausgangsposition
- Y: Messposition
- Z: zweite Messposition
- I - VII: Zonen unterschiedlicher Stauchhärte

## Patentansprüche

1. Prüfvorrichtung (100, 300) zur Messung der Stauchhärte von Schaumstoffen und/oder Polsterungen (200), insbesondere Matratzen, umfassend
- einen Prüfstempel (130, 130a, 130b), der zur Messung der Stauchhärte mit einer einstellbaren Kraft beaufschlagbar und vertikal entlang einer Strecke (C) bewegbar ist,
- eine Messeinrichtung (140), die geeignet ist zur Messung einer Weglänge, um die der Prüfstempel (130, 130a, 130b) entlang der Strecke (C) vertikal bewegt oder bewegbar ist,
**dadurch gekennzeichnet, dass**
- die Prüfvorrichtung (100, 300) zur Messung der Stauchhärte eines Schaumstoffs und/oder einer Polsterung (200) mit mindestens zwei Zonen (210, 220) unterschiedlicher Stauchhärte mindestens zwei Prüfstempel (130, 130a, 130b) umfasst, wobei die Anzahl der Prüfstempel (130, 130a, 130b) mindestens der Anzahl der Zonen (210, 220) entspricht und/oder jeder Zone (210, 220) zumindest ein Prüfstempel (130, 130a, 130b) zugeordnet ist,
- die Weglänge, um die jeder der Prüfstempel (130, 130a, 130b) bewegt oder bewegbar ist mittels eines einzigen, ersten optischen Sensors (141) messbar ist.

2. Prüfvorrichtung (100, 300) nach Anspruch 1, **dadurch gekennzeichnet, dass** die Prüfvorrichtung (100, 300) eine Vielzahl von Prüfstempeln (130, 130a, 130b) umfasst, wobei jeder Zone (210, 220) des zu prüfenden Schaumstoffs und/oder der zu prüfenden Polsterung (200) einer oder mehrere Prüfstempel (130, 130a) zugeordnet sind.

3. Prüfvorrichtung (100, 300) nach einem der vorhergehenden Ansprüche, **dadurch gekennzeichnet, dass** die Prüfstempel (130, 130a, 130b) zeitgleich mit der einstellbaren Kraft oder mit einer jeweils einstellbaren Kraft beaufschlagbar sind.

4. Prüfvorrichtung (100, 300) nach einem der vorhergehenden Ansprüche, **dadurch gekennzeichnet, dass** die Prüfvorrichtung (100, 300) einen oder mehrere Messbalken (120) umfasst, wobei sich der Messbalken (120) von einem ersten Ende (211) des Schaumstoffs und/oder der Polsterung (200) hin zu einem zweiten Ende (221) des Schaumstoffs und/oder der Polsterung (200) erstreckt und die Prüfstempel (130, 130a, 130b) entlang des Messbalkens (120) angeordnet sind.

5. Prüfvorrichtung (100, 300) nach Anspruch 4, **dadurch gekennzeichnet, dass** die Messeinrichtung (140) den ersten optischen Sensor (141) aufweist und der erste optische Sensor (141) entlang des Messbalkens (120) verfahrbar ist.

6. Prüfvorrichtung (100, 300) nach Anspruch 4 oder 5, **dadurch gekennzeichnet, dass** der eine oder die mehreren Messbalken (120) ausgehend von einer Ausgangsposition (X) vertikal in Richtung des zu prüfenden Schaumstoffs und/oder der zu prüfenden Polsterung (200) absenkbar sind.

7. Prüfvorrichtung (100, 300) nach einem der vorhergehenden Ansprüche, **gekennzeichnet durch** einen zweiten optischen Sensor (123) zur automatischen Ermittlung der Höhe des zu prüfenden Schaumstoffs und/oder der zu prüfenden Polsterung (200).

8. Vorrichtung (100, 300) nach Anspruch 7, **dadurch gekennzeichnet, dass** der zweite optische Sensor (123) entlang einer Strecke XY höhenverstellbar ist.

9. Vorrichtung (100, 300) nach einem der Ansprüche 4 - 8, **gekennzeichnet durch** einen dritten optischen Sensor (320) zur Ermittlung einer zweiten Messposition (Z) des Messbalkens (120).

10. Vorrichtung (100, 300) nach Anspruch 9, **dadurch gekennzeichnet, dass** der dritte optische Sensor (320) als Lichtschranke ausgebildet ist und die zweite Messposition (Z) des Messbalkens (120) mittels der Lichtschranke feststellbar ist.

11. Prüfvorrichtung (100, 300) nach einem der vorhergehenden Ansprüche **dadurch gekennzeichnet, dass** die einstellbare Kraft mittels einer Druckluft und/oder mittels einer Massenbeaufschlagung erzeugbar ist.

12. Prüfvorrichtung (100, 300) nach einem der vorhergehenden Ansprüche, **dadurch gekennzeichnet, dass** die Messeinrichtung (140) als optisch arbeitende Abstandsmesseinrichtung, insbesondere als Laserentfernungs-Messeinrichtung ausgeführt ist.

13. Prüfvorrichtung (100, 300) nach einem der vorhergehenden Ansprüche, **dadurch gekennzeichnet, dass** die Prüfvorrichtung (100, 300) zur Auslesung und/oder Verarbeitung und/oder Regelung von Messgrößen bzw. Prüfparametern und/oder zur Steuerung der Prüfvorrichtung (100, 300) mit einem Prozessrechner verbindbar und/oder verbunden ist.

14. Prüfvorrichtung (100, 300) nach einem der vorhergehenden Ansprüche, **dadurch gekennzeichnet, dass** die Prüfvorrichtung (100, 300) einen zusätzlichen Referenz-Prüfstempel aufweist, der zur Messung und/oder zur Regelung der eingestellten bzw. der einstellbaren Kraft geeignet ist.

15. Verfahren zur Prüfung der Stauchhärte von Schaumstoffen und/oder Polsterungen (200), insbesondere von Matratzen, **gekennzeichnet durch** die nachfolgenden Schritte:
- Ausrichten einer Prüfvorrichtung (100, 300), nach einem der Ansprüche 1 - 14 zu dem Schaumstoff und/oder der Polsterung (200), wobei ein Messbalken (120) mit mindestens zwei Prüfstempeln (130, 130a, 130b) derart in Richtung des Schaumstoffs und/oder Polsterung (200) abgesenkt wird, dass mindestens einer der Prüfstempel (130, 130a, 130b) kraftfrei berührend an einer Oberfläche (230) des Schaumstoffs und/oder der Polsterung (200) anliegt,
- Beaufschlagen der Prüfstempel (130, 130a, 130b) mit einer eingestellten Kraft, wobei die Prüfstempel (130, 130a, 130b) in die Oberfläche (230) des Schaumstoffs und/oder der Polsterung (200) einsinken,
- Messen einer Weglänge, die der jeweilige Prüfstempel (130, 130a, 130b) in die Oberfläche (230) des Schaumstoffs und/oder der Polsterung (200) eingesunken ist,
- Verarbeiten und/oder Auswerten einer oder mehrerer Messgrößen bezüglich eines oder mehrerer Prüfparameter mittels eines Prozessrechners.

## Claims

1. Testing device (100, 300) for measuring the compressive hardness of foam materials and/or upholstery (200), in particular mattresses, comprising
- A test indenter (130, 130a, 130b), which can be applied with an adjustable load for measuring the compressive hardness and is movable vertically along a distance (C),
- a measuring device (140), which is suitable for measuring a length of travel, that the test indenter (130, 130a, 130b) moves or is movable vertically along the distance (C),
**characterised in that**
- the testing device (100, 300) for measuring the compressive hardness of a foam material and/or an upholstery (200) with at least two zones (210, 220) of different compressive hardness comprises at least two test indenters (130, 130a, 130b), wherein the number of test indenters (130, 130a, 130b) corresponds at least to the number of zones (210, 220) and/or each zone (210, 220) is associated with at least one test indenter (130,130a, 130b),
- the length of travel over which each of the test indenters (130,130a, 130b) moves or can move can be measured by means of a single, first optical sensor (141).

2. Testing device (100, 300) in accordance with claim 1, **characterised in that** the testing device (100, 300) comprises a plurality of test indenters (130, 130a, 130b), wherein each zone (210, 220) of the foam material to be tested and/or the upholstery (200) to be tested is allocated to one or multiple test indenters (130,130a).

3. Testing device (100, 300) in accordance with one of the preceding claims, **characterised in that** the test indenters (130,130a, 130b) are acted on simultaneously with the adjustable load or each with a separately adjustable load.

4. Testing device (100, 300) in accordance with one of the preceding claims, **characterised in that** the testing device (100, 300) comprises one or multiple measurement beams (120), wherein the measurement beam (120) extends from a first end (211) of the foam material and/or the upholstery (200) to a second end (221) of the foam material and/or the upholstery (200) and the test indenters (130, 130a, 130b) are arranged along the measuring beam (120).

5. Testing device (100, 300) in accordance with claim 4, **characterised in that** the measuring device (140) comprises the first optical sensor (141) and the first optical sensor (141) can travel along the measurement beam (120).

6. Testing device (100, 300) in accordance with claim 4 or 5, **characterised in that** the one or multiple measurement beams (120), starting from an initial position (X), can be lowered vertically in the direction of the foam material to be tested and/or the upholstery to be tested (200).

7. Testing device (100, 300) in accordance with one of the preceding claims, **characterised by** a second optical sensor (123) for automatic determination of the height of the foam material and/or the upholstery to be tested (200).

8. Device (100, 300) in accordance with claim 7, **characterised in that** the second optical sensor (123) can be adjusted in height along a distance XY.

9. Device (100, 300) in accordance with one of the claims 4 - 8, **characterised by** a third optical sensor (320) for determining a second measurement position (Z) of the measurement beam (120).

10. Device (100, 300) in accordance with claim 9, **characterised in that** the third optical sensor (320) is designed as a light barrier and the second measurement position (Z) of the measurement beam (120) can be determined by means of the light barrier.

11. Testing device (100, 300) in accordance with one of the preceding claims, **characterised in that** the adjustable load can be produced by application of compressed air and/or by means of an application of mass.

12. Testing device (100, 300) in accordance with one of the preceding claims, **characterised in that** the measuring device (140) is designed as an optically operating distance measuring device, in particular as a laser distance measuring device.

13. Testing device (100, 300) in accordance with one of the preceding claims, **characterised in that** the testing device (100, 300) can be connected and/or is connected to a process computer for read-out and/or processing and/or regulating measured variables or test parameters and/or control of the testing device (100, 300).

14. Testing device (100, 300) in accordance with one of the preceding claims, **characterised in that** the testing device (100, 300) includes an additional reference test indenter, which is suitable for measurement and/or control of the preset or adjustable load.

15. Method for testing the compressive hardness of foam materials and/or upholstery (200), in particular of mattresses, **characterised by** the following steps:
- Alignment of a testing device (100, 300) in accordance with claims 1 -14 with the foam material and/or upholstery (200), wherein a measurement beam (120) with at least two test indenters (130, 130a, 130b) is lowered in the direction of the foam material and/or upholstery (200) so that at least one of the test indenters (130, 130a, 130b) is brought into contact, without load, with a surface (230) of the foam material and/or upholstery (200),
- Application of the test indenter (130, 130a, 130b) with a preset load, wherein the test indenters (130, 130a, 130b) sink into the surface (230) of the foam material and/or the upholstery (200),
- Measurement of a length which the respective test indenter (130, 130a, 130b) has sunk into the surface (230) of the foam material and/or the upholstery (200),
- Processing and/or evaluating one or multiple measurements in relation to one or a plurality of test parameters by means of a process computer.

## Revendications

1. Dispositif de test (100, 300) pour mesurer la dureté en compression de mousses et/ou de rembourrages (200), en particulier de matelas, comprenant :
- un poinçon de test (130, 130a, 130b), lequel peut être sollicité par une force réglable et est mobile verticalement le long d'un chemin (C) pour mesurer la dureté en compression,
- un dispositif de mesure (140), lequel est adapté pour mesurer une longueur de trajet selon laquelle le poinçon de test (130, 130a, 130b) est déplacé ou déplaçable verticalement le long du chemin (C),
**caractérisé en ce que**
- le dispositif de test (100, 300) comprend au moins deux poinçons de test (130, 130a, 130b) pour mesurer la dureté en compression d'une mousse et/ou d'un rembourrage (200) ayant au moins deux zones (210, 220) de duretés en compression différentes, dans lequel le nombre de poinçons de test (130, 130a, 130b) correspond au moins au nombre de zones (210, 220) et/ou à chaque zone (210, 220) est associé au moins un poinçon de test (130, 130a, 130b),
- la longueur de trajet selon laquelle chaque poinçon de test (130, 130a, 130b) se déplace ou peut se déplacer peut-être mesurée au moyen d'un unique premier capteur optique (141).

2. Dispositif de test (100, 300) selon la revendication 1, **caractérisé en ce que** le dispositif de test (100, 300) comprend une pluralité de poinçons de test (130, 130a, 130b), dans lequel chaque zone (210, 220) de la mousse à tester et/ou du rembourrage (200) à tester est associée à un ou plusieurs poinçons de test (130, 130a).

3. Dispositif de test (100, 300) selon l'une quelconque des revendications précédentes, **caractérisé en ce que** les poinçons de test (130, 130a, 130b) sont sollicités en même temps avec la force réglable ou avec une force réglable respective.

4. Dispositif de test (100, 300) selon l'une quelconque des revendications précédentes, **caractérisé en ce que** le dispositif de test (100, 300) comprend une ou plusieurs poutres de mesure (120), dans lequel la poutre de mesure (120) s'étend depuis une première extrémité (211) de la mousse et/ou du rembourrage (200) jusqu'à une seconde extrémité (221) de la mousse et/ou du rembourrage (200), et les poinçons de test (130, 130a, 130b) sont disposés le long de la poutre de mesure (120).

5. Dispositif de test (100, 300) selon la revendication 4, **caractérisé en ce que** le dispositif de mesure (140) comprend ledit premier capteur optique (141), et ledit premier capteur optique (141) est déplaçable le long de la poutre de mesure (120).

6. Dispositif de test (100, 300) selon la revendication 4 ou la revendication 5, **caractérisé en ce que** ladite une ou lesdites plusieurs poutres de mesure (120) peuvent être abaissées verticalement à partir d'une position de départ (X) en direction de la mousse à tester et/ou du rembourrage (200) à tester.

7. Dispositif de test (100, 300) selon l'une quelconque des revendications précédentes, **caractérisé par** un second capteur optique (123) pour déterminer de façon automatique la hauteur de la mousse à tester et/ou du rembourrage (200) à tester.

8. Dispositif (100, 300) selon la revendication 7, **caractérisé en ce que** le second capteur optique (123) est réglable en hauteur le long d'une distance XY.

9. Dispositif (100, 300) selon l'une quelconque des revendications 4 à 8, **caractérisé par** un troisième capteur optique (320) pour déterminer une seconde position de mesure (Z) de la poutre de mesure (120).

10. Dispositif (100, 300) selon la revendication 9, **caractérisé en ce que** le troisième capteur optique (320) est conçu sous forme d'une barrière optique, et la seconde position de mesure (Z) de la poutre de mesure (120) peut être déterminée au moyen de la barrière optique.

11. Dispositif de test (100, 300) selon l'une quelconque des revendications précédentes, **caractérisé en ce que** la force réglable peut être générée au moyen d'un air comprimé et/ou au moyen de l'application d'une masse.

12. Dispositif de test (100, 300) selon l'une quelconque des revendications précédentes, **caractérisé en ce que** le dispositif de mesure (140) est conçu sous forme d'un dispositif de mesure à distance à fonctionnement optique, en particulier sous forme d'un dispositif de mesure à distance à laser.

13. Dispositif de test (100, 300) selon l'une quelconque des revendications précédentes, **caractérisé en ce que** le dispositif de test (100, 300) peut être connecté et/ou est connecté à un ordinateur programmé pour la lecture et/ou pour le traitement et/ou pour le contrôle de variables mesurées telles que des paramètres de test et/ou pour la commande du dispositif de test (100, 300).

14. Dispositif de test (100, 300) selon l'une quelconque des revendications précédentes, **caractérisé en ce que** le dispositif de test (100, 300) comprend un poinçon de test de référence additionnel, lequel est adapté pour mesurer et/ou pour contrôler la force appliquée ou la force réglable.

15. Procédé pour mesurer la dureté en compression de mousses et/ou de rembourrages (200), en particulier de matelas, **caractérisé par** les étapes suivantes :
- aligner un dispositif de test (100, 300) selon l'une quelconque des revendications 1 à 14 avec la mousse et/ou le rembourrage (200), dans lequel une poutre de mesure (120) ayant au moins deux poinçons de test (130, 130a, 130b) est abaissée en direction de la mousse et/ou du rembourrage (200) de telle façon qu'au moins l'un des poinçons de test (130, 130a, 130b) soit en contact sans application de force avec une surface supérieure (230) de la mousse et/ou du rembourrage (200),
- soumettre les poinçons de test (130, 130a, 130b) à une force réglée par laquelle les poinçons de test (130, 130a, 130b) s'enfoncent dans la surface supérieure (230) de la mousse et/ou du rembourrage (200),
- mesurer une longueur de trajet selon laquelle le poinçon de test (130, 130a, 130b) respectif est enfoncé dans la surface supérieure (230) de la mousse et/ou du rembourrage (200),
- traiter et/ou évaluer une ou plusieurs variables mesurées correspondant à un ou plusieurs paramètres de mesure au moyen d'un ordinateur programmé.
